Europäisches Patentamt

European Patent Office

Office européen des brevets

(11) Veröffentlichungsnummer: **0 398 275**
**A2**

## (12) EUROPÄISCHE PATENTANMELDUNG

(21) Anmeldenummer: **90109193.4**

(22) Anmeldetag: **16.05.90**

(51) Int. Cl.⁵: **B60J 3/00**

(30) Priorität: **18.05.89 DE 3916199**
**09.09.89 DE 3930122**

(43) Veröffentlichungstag der Anmeldung:
**22.11.90 Patentblatt 90/47**

(84) Benannte Vertragsstaaten:
**ES FR GB IT**

(71) Anmelder: **EUGEN ZIPPERLE GMBH & CO. KG.**
**Postfach 2 40**
**D-7144 Asperg(DE)**

(72) Erfinder: **Zipperle, Michael, Dipl.-Ing.**
**Mühlstrasse 8**
**D-7140 Ludwigsburg(DE)**

(74) Vertreter: **Patentanwälte Phys. Bartels**
**Dipl.-Ing. Fink Dr.-Ing. Held**
**Lange Strasse 51**
**D-7000 Stuttgart 1(DE)**

(54) **Sonnenblende für Kraftfahrzeuge.**

(57) Bei einer mit einem Spiegel versehenen Sonnenblende für Kraftfahrzeuge, deren Blendenkörper (3) eine Beleuchtungseinrichtung (6) enthält und mit einer schwenkbaren Klappe (8) versehen ist, die in ihrer Schließstellung sowohl den Spiegel als auch die Lichtaustrittsfläche der Beleuchtungseinrichtung abdeckt, ist der Spiegel (9) an der Innenseite der Klappe (8) angeordnet. Der Lichtaustritt ist auf der in der Gebrauchslage des Blendenkörpers (3) der Frontscheibe (4) des Fahrzeuges zugekehrten Vorderseite des Blendenkörpers (3) vorgesehen.

Fig.1

EP 0 398 275 A2

## Sonnenblende für Kraftfahrzeuge

Die Erfindung betrifft eine mit einem Spiegel versehene Sonnenblende für Kraftfahrzeuge, welche die Merkmale des Oberbegriffs des Anspruches 1 aufweist.

Bei den bekannten Sonnenblenden dieser Art ist der Spiegel in diejenige Seite des Blendenkörpers eingelassen, welche in der Gebrauchsstellung der Sonnenblende, das heißt im heruntergeklappten Zustand des Blendenkörpers, dem Fahrzeuginsassen zugewandt ist. Neben der einen Schmalseite oder neben beiden Schmalseiten des Spiegels ist die ebenfalls in den Blendenkörper eingelassene Beleuchtungseinrichtung angeordnet. Die schwenkbare Klappe, welche in ihrer Schließstellung den Spiegel abdeckt, ist oberhalb des Spiegels schwenkbar am Blendenkörper gelagert und kann, wenn der Blendenkörper sich in der Gebrauchsstellung befindet, nach oben geklappt werden.

Der Erfindung liegt die Aufgabe zugrunde, eine verbesserte Sonnenblende zu schaffen. Diese Aufgabe löst eine Sonnenblende mit den Merkmalen des Anspruches 1.

Die Anordnung des Spiegels an der Klappe ergibt den Vorteil, daß der Spiegel dann, wenn sich der Blendenkörper in seiner Nichtgebrauchslage liegt, in der er sich üblicherweise befindet, benutzt werden kann. Vor allem kann man bei gleicher Größe der Klappe den Spiegel größer machen als bei den bekannten Sonnenblenden. Weiterhin kann die gewünschte Lage des Spiegels bei dessen Gebrauch besser an die Erfordernisse angepaßt werden, als dies möglich ist, wenn hierfür der Blendenkörper geschwenkt werden muß. Ein weiterer, wesentlicher Vorteil der erfindungsgemäßen Lösung besteht darin, daß im Blendenkörper der gesamte von der Klappe abdeckbare Bereich für die Beleuchtungseinrichtung genutz werden kann. Es kann also eine wesentlich größere und damit mehr Licht aussendende Beleuchtungseinrichtung vorgesehen werden.

Um das Licht der Beleuchtungseinrichtung auf das Gesicht des in den Spiegel schauenden Insassen zu werfen, obwohl die eine Seite des Blendenkörpers nach oben und die andere nach unten weist, kann man eine Lichtumlenkeinrichtung, insbesondere eine solche gemäß Anspruch 2, vorsehen. Vorteilhafter ist es jedoch, Mittel vorzusehen, die es ermöglichen, wahlweise das Licht der Beleuchtungseinrichtung gegen das Gesicht der in den Spiegel schauenden Person oder, für die Verwendung als Leseleuchte, nach unten zu werfen. Die Lichtquelle kann dann ortsunveränderlich im Blendenkörper angeordnet sein. Man kann dabei gemäß Anspruch 3 diese Mittel mit Hilfe der Klappe steuern. Diese Mittel, bei denen es sich vorzugsweise um mindestens einen Reflektor handelt, können die Lichtstrahlen umlenken. Man kann aber auch gemäß Anspruch 4 die Beleuchtungseinrichtung um eine zur Klappachse parallele Achse schwenkbar in Blendenkörper lagern. Die Richtung der Lichtstrahlen ist dann von der Schwenklage der Beleuchtungseinrichtung abhängig.

Bei einer bevorzugten Ausführungsform erfolgt die Übertragung der Schwenklage der Klappe auf die Schwenklage der Beleuchtungseinrichtung gemäß Anspruch 5. Besonders Vorteilhaft ist hierbei, daß es genügt, die Klappe über die vorzugsweise verrastbare Gebrauchslage des Spiegels hinaus zu verschwenken, um die Beleuchtungseinrichtung wieder zurück in die Ausgangsstellung zu schwenken, in welcher sie als Leseleuchte verwendet werden kann.

Um die Beleuchtungseinrichtung aus- und einschalten zu können, kann der Blendenkörper mit einem Schalter versehen sein, der mittels der Klappe betätigbar sein kann. Man kann aber auch die Beleuchtungseinrichtung in Abhängigkeit von der Umgebungshelligkeit mit Hilfe eines Helligkeitssensors aus- und einschalten. Die Schaltung kann dabei so gewählt sein, daß der Helligkeitssensor die Beleuchtungseinrichtung nur dann bei ausreichender Umgebungshelligkeit abschaltet, wenn sie auf eine der beiden Funktionen eingestellt ist.

Bei einer bevorzugten Ausführungsform weist der Blendenkörper auf der der Beleuchtungseinrichtung abgekehrten Seite, welche in der Nichtgebrauchslage des Blendenkörpers gegen das Dach des Fahrzeuges weist, eine Tasche auf. Diese Tasche ist nur zugänglich, wenn der Blendenkörper heruntergeklappt ist, und sie ist verdeckt, wenn der Blendenkörper in seiner Nichtgebrauchsstellung steht, so daß dann nicht erkennbar ist, daß sich in dieser Tasche Papiere oder dergleichen befinden. Die Tasche kann durch eine Folie gebildet sein, welche vorzugsweise aus dem gleichen Material wie die Umhüllung des Blendenkörpers besteht und die längs ihres anderen Randes sowie ihrer beiden seitlichen Ränder mit dem Blendenkörper verschweißt ist.

Im folgenden ist die Erfindung anhand von zwei in der Zeichnung dargestellten Ausführungsbeispielen im einzelnen erläutert. Es zeigen

Fig. 1 eine Seitenansicht des ersten Ausführungsbeispiels in der Nichtgebrauchslage des Blendenkörpers

Fig. 2 eine perspektivisch dargestellte Draufsicht auf die die Beleuchtungseinrichtung aufweisende Seite des Blendenkörpers und die den Spiegel tragende Seite der Klappe des ersten Ausführ-

rungsbeispiels im geöffneten Zustand,

Fig. 3 eine Seitenansicht des zweiten Ausführungsbeispiels mit der Klappe in der Gebrauchsstellung des Spiegels,

Fig. 4 eine Seitenansicht des zweiten Ausführungsbeispiels mit der Klappe in der Stellung der Beleuchtungseinrichtung als Leselampe.

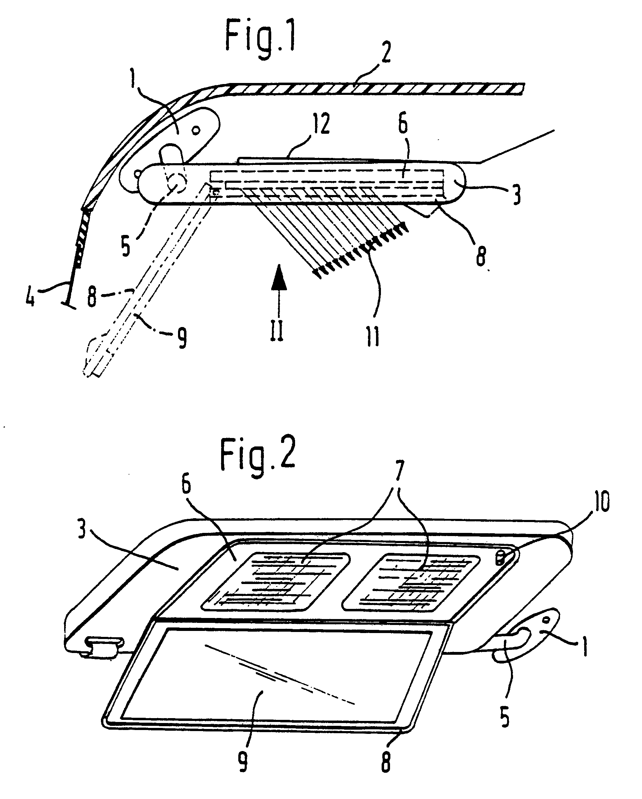

Eine mittels eines Lagerbockes 1 an einer Kraftfahrzeugkarosserie 2 befestigbare Sonnenblende weist einen Blendenkörper 3 auf, der im Bereich seiner in der Nichtgebrauchsstellung gegen die Frontscheibe 4 weisenden Randzone auf einer Achse 5 schwenkbar gelagert ist. Der Blendenkörper 3 kann deshalb aus der in Fig. 1 dargestellten Nichtgebrauchslage um etwas mehr als 90° nach unten in seine Gebrauchslage geschwenkt werden, in welcher er parallel zur Frontscheibe 4 liegt.

Der Blendenkörper 3 ist auf derjenigen Seite, welche in seiner Gebrauchsstellung der Frontscheibe 4 zugekehrt ist, mit einer rechteckförmigen Aussparung versehen, deren beide Längsseiten parallel zu der Achse 5 verlaufen. In diese Aussparung ist eine Beleuchtungseinrichtung 6 eingelassen, welche im Ausführungsbeispiel zwei im Abstand nebeneinander angeordnete Fenster 7 als Lichtaustrittsöffnungen aufweist. Hinter diesen Fenstern 7 sind nicht dargestellte Lampen als Lichtquellen angeordnet. Die Fenster 7 sind, wie Fig. 1 zeigt, so ausgebildet, daß sie das von den Lampen abgestrahlte Licht umlenken und zwar in der Art, daß es unter einem spitzen Winkel aus den Fenstern 7 austritt. Dieser Winkel ist dabei so gewählt, daß das Licht dann auf das Gesicht eines Fahrzeuginsassen fällt, wenn der Blendenkörper 3 sich in seiner Nichtgebrauchslage befindet.

An dem der Achse 5 näher liegenden Längsrand der Ausnehmung ist eine Klappe 8 schwenkbar um eine zur Achse 5 parallele Achse mit dem Blendenkörper 3 verbunden. Die Form der Klappe 4 ist an die Querschnittsfläche der Aussparung angepaßt, damit die Klappe 8, dann wenn sie an den Fenstern 7 anliegt und diese bedeckt, bündig mit dem Rand der Aussparung abschließt. Auf der in der Schließlage den Fenstern 7 zugewandten Seite trägt die Klappe 8 einen Spiegel 9, welcher nur wenig kleiner ist, als die Klappe 8. Die Lagerung der Klappe 8 ist so ausgebildet, daß sie in jeder Schwenkstellung sicher festgehalten wird.

In der Stromversorgungsleitung der Beleuchtungseinrichtung 6 ist ein Schalter angeordnet, von dem Fig. 2 nur ein stiftförmiges Betätigungsglied 10 dargestellt ist, das aus der Ebene der Fenster 7 in der einen Ecke herausragt. Ist die Klappe 8 geschlossen, dann ist die Beleuchtungseinrichtung 6 ausgeschaltet. Sie wird selbsttätig eingeschaltet, sobald die Klappe 8 aus ihrer Schließstellung herausgeschwenkt wird, da dann das Betätigungsglied 10 des Schalters freigegeben wird.

Wird der Spiegel 9 benötigt, dann braucht nur die Klappe 8 in die gewünschte, in Fig. 1 mit strichpunktierten Linien dargestellte Gebrauchslage geschwenkt zu werden. Der Spiegel ist dann auf das Gesicht eines Fahrzeuginsassen ausgerichtet, das von den aus dem Fenster 7 austretenden Lichtstrahlen 11 beleuchtet wird.

Auf der in der Nichtgebrauchsstellung des Blendenkörpers 3 nach oben weisenden Seite ist, wie Fig. 1 zeigt, der Blendenkörper 3 mit einer Tasche 12 versehen, in welche Papiere oder dergleichen eingesteckt werden können. Die Tasche 12 wird einerseits vom Blendenkörper 3 und andererseits von einer Folie gebildet, die längs ihres unteren Randes und längs ihrer beiden seitlichen Ränder mit dem Blendenkörper 3 verschweißt ist. Im Ausführungsbeispiel besteht die Folie aus dem gleichen Material wie die Umhüllung des Blendenkörpers 3. Sie ist längs der umlaufenden Naht des Blendenkörpes mit diesem und dessen Umhüllung verschweißt.

Der Schwenkwinkel der Klappe 8 beträgt im Ausführungsbeispiel etwa 130°. Der relativ große Spiegel 9 kann deshalb auch bei Insassen unterschiedlicher Größe in die richtige Lage geschwenkt werden. Da das Verstellmoment des Blendenkörpers 3 wesentlich größer ist als dasjenige der Klappe 8, ändert bei einer Schwenkung der Klappe 8 der Blendenkörper 3 nicht seine Lage.

Das zweite Ausführungsbeispiel weist wie das erste Ausführungsbeispiel einen Blendenkörper 103 auf, der um eine Achse 105 schwenkbar gelagert ist, welche mittels eines Lagerbockes 101 mit der Kraftfahrzeugkarosserie 102 verbindbar ist. Ebenso ist der Blendenkörper 103 wie bei dem ersten Ausführungsbeispiel auf derjenigen Seite, welche in seiner Gebrauchsstellung der Frontscheibe 104 zugekehrt ist, mit einer rechteckförmigen Aussparung 113 versehen, deren beide Längsränder parallel zur Achse 105 verlaufen. An dem der Achse näher liegenden Längsrand der Aussparung 113 ist eine Klappe 108 schwenkbar um eine zur Achse 5 parallele Achse mit dem Blendenkörper 103 verbunden. Die Form der Klappe 108 ist an die Querschnittsfläche der Aussparung 113 angepaßt, damit die Klappe 108 die Aussparung vollständig verschließt, wenn sie bündig mit deren Rand abschließt. Schließlich trägt, wie beim ersten Ausführungsbeispiel, die Klappe 108 auf der in der Schließlage der Aussparung 113 zugekehrten Seite einen Spiegel 109, welcher nur wenig kleiner ist, als die Klappe 108. Die Lagerung der Klappe 108 ist so ausgebildet, daß sie in jeder Schwenkstellung sicher festgehalten wird.

Im Gegensatz zum ersten Ausführungsbeispiel ist eine Beleuchtungseinrichtung 106 um eine zur Schwenkachse der Klappe 108 parallele Achse 106' schwenkbar im Blendenkörper 103 gelagert.

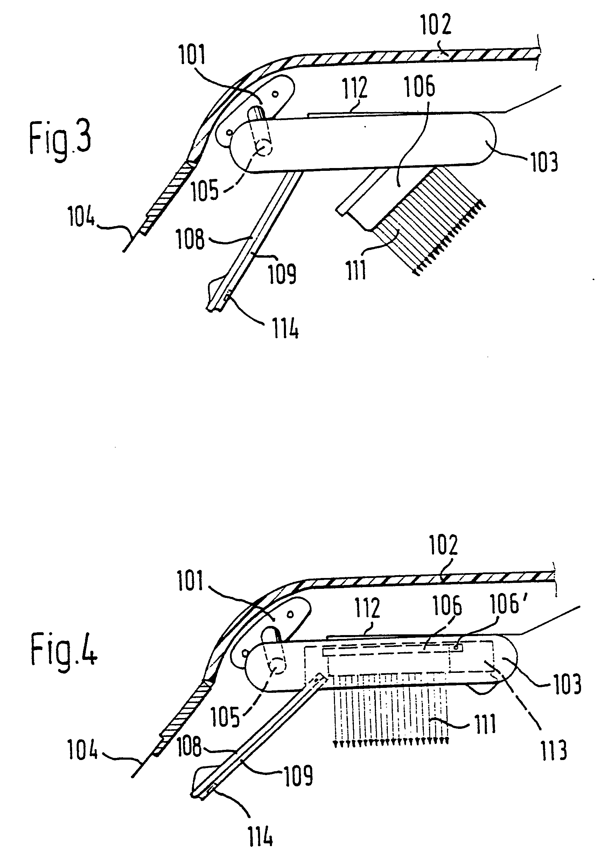

Wie Fig. 4 zeigt, ist die Schwenkachse 106' der Beleuchtungseinrichtung 106 nahe dem von der Achse 105 weiter entfernt liegenden Längsrand der Aussparung 113 angeordnet. Die Beleuchtungseinrichtung 106 kann dadurch aus der in Fig. 4 dargestellten Lage, in welcher sie vollständig in der Aussparung 113 liegt, entgegen dem Uhrzeigersinn bei einer Blickrichtung gemäß Fig. 3 in die hier dargestellte Schwenklage und aus dieser zurück in die Ausgangslage geschwenkt werden. Wenn die Beleuchtungseinrichtung 106 sich in der in Fig. 4 dargestellten Schwenklage befindet, liegt ihre ebene Lichtaustrittsfläche parallel zu der mit der Aussparung 113 versehenen Fläche des Blendenkörpers 103. Sind in dieser Schwenkstellung die Klappe 108 geöffnet, der Blendenkörper 103 in seiner Nichtgebrauchslage und die Beleuchtungseinrichtung 106 eingeschaltet, dann sind die von der Beleuchtungseinrichtung 106 erzeugten Lichtstrahlen 111 nach unten gerichtet. Befindet sich hingegen die Beleuchtungseinrichtung 106 in der in Fig. 3 dargestellten Schwenklage, in welcher sie einen spitzen Winkel mit der in Fig. 4 dargestellten Schwenklage einschließt, dann sind die Lichtstrahlen 111 gegen das Gesicht der in den Spiegel 109 schauenden Person gerichtet. Die Beleuchtungseinrichtung 106 dient also in dieser Stellung als Kosmetiklampe.

Ein nicht dargestellter Antriebsmechanismus verbindet die Klappe 108 mit der Beleuchtungseinrichtung 106 derart, daß das Schwenken der Klappe 108 aus der Schließstellung in die in Fig. 3 dargestellte Gebrauchsstellung des Spiegels 109 eine Schwenkbewegung der Beleuchtungseinrichtung 106 in die in Fig. 3 dargestellte Schwenklage bedingt. Die Klappe 108 wird in dieser Schwenklage durch einen kraftschlüssigen Rastmechanismus festgehalten. Wird nun die Klappe 108 über diese Schenkstellung hinaus im Uhrzeigersinn bei einer Blickrichtung gemäß der Fig. 3 und 4 in die in Fig. 4 dargestellte Schwenklage geschwenkt, dann wird die Beleuchtungseinrichtung 106 wieder in die Ausgangslage zurückgeschwenkt, in der sie vollständig in der Aussparung 113 liegt. Die Beleuchtungseinrichtung 106 kann dann als Leselampe verwendet werden.

Der Antriebsmechanismus kann so ausgebildet sein, daß beim Zurückschwenken der Klappe 108 in die Schließstellung zunächst die Beleuchtungseinrichtung 106 wieder in die in Fig. 3 dargestellte Lage geschwenkt wird und dann erst in die Ausgangslage zurückkehrt. Man kann den Antriebsmechanismus aber auch so ausbilden, daß die Klappe 108 beim Öffnen die Beleuchtungseinrichtung 106 entgegen der Kraft einer Rückstellfeder in die in Fig. 3 dargestellte Schenklage schwenkt und daß dann, wenn die Klappe 108 über die der Gebrauchslage des Spielges 109 entsprechende Stellung hinaus geschwenkt wird, der Antriebsmechanismus die Beleuchtungseinrichtung 106 freigibt, so daß diese von der Rückholfeder in die Ausgangsstellung zurück geschwenkt wird. Die Klappe 108 kann dann in die Schließlage gebracht werden, ohne daß zwischendurch die Beleuchtungseinrichtung 106 aus der Aussparung 113 heraus geschwenkt wird. Erst wenn die Klappe 108 ihre Schließlage erreicht hat, wird die Beleuchtungseinrichtung 106 wieder über den Antriebsmechanismus mit der Klappe 108 gekoppelt.

Auf der den Spiegel 109 tragenden Seite der Klappe 108 ist ein Helligkeitssensor 114, beispielsweise eine Fotozelle, vorgesehen, welcher bei einer ausreichenden Umgebungshelligkeit verhindert, daß die Beleuchtungseinrichtung leuchtete, auch wenn die Klappe 108 geöffnet ist und einen nicht dargestellten dem Schalter 10 des ersten Ausführungsbeispiels entsprechenden Schalter freigibt, damit dieser den Stromkreis der Beleuchtungseinrichtung 106 schließt.

Wie bei dem Ausführungsbeispiel gemäß den Fig. 1 und 2, weist der Blendenkörper 103 auf der in der Nichtgebrauchsstellung der Fahrzeugkarosserie zugewandten Seite eine Tasche 112 auf, die zur Achse 105 hin offen ist.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Ansprüche

1. Mit einem Spiegel versehene Sonnenblende für Kraftfahrzeuge, die einen um eine Klappachse zwischen einer Nichtgebrauchsstellung und einer Gebrauchsstellung verschwenkbaren Blendenkörper aufweist, der eine Beleuchtungseinrichtung enthält und mit einer um eine zur Klappachse parallele Achse schwenkbaren Klappe versehen ist, die in ihrer Schließstellung mit ihrer Innenseite am Blendenkörper anliegt und sowohl den Spiegel als auch die Lichtaustrittsfläche der Beleuchtungseinrichtung abdeckt, dadurch gekennzeichnet, daß

a) der Spiegel (9; 109) an der Innenseite der Klappe (8; 108) angeordnet ist und

b) der Lichtaustritt auf der in der Gebrauchslage des Blendenkörpers (3; 103) der Frontscheibe (4; 104) des Fahrzeuges zugekehrten Vorderseite des Blendenkörpers (3; 103) vorgesehen ist.

2. Sonnenblende nach Anspruch 1, dadurch gekennzeichnet, daß die Lichtaustrittsfläche der Beleuchtungseinrichtung (6) durch wenigstens ein Fenster (7) gebildet ist, welches die Lichtstrahlen in eine Richtung umlenkt, in welcher die austretenden Lichtstrahlen (11) in einem spitzen, sich zum freien Längsrand des Blendenkörpers (3) hin öffnenden Winkel zur Vorderseite des Blendenkörpers (3) verlaufen.

3. Sonnenblende nach Anspruch 1, gekennzeichnet durch Mittel, die in Abhängigkeit von der Schwenklage der Klappe (108) die Lichtstrahlen (111) der Beleuchtungseinrichtung (106) gegen das Gesicht einer in den Spiegel (109) blickenden Person oder für die Verwendung der Beleuchtungseinrichtung (106) als Leseleuchte nach unten werfen.

4. Sonnenblende nach Anspruch 3, dadurch gekennzeichnet, daß die Beleuchtungseinrichtung (106) um eine zur Klappe (105) parallele Achse (106') schwenkbar im Blendenkörper (103) gelagert und mittels einer Kraftübertragungseinrichtung durch die Klappe (108) verschwenkbar ist.

5. Sonnenblende nach Anspruch 4, dadurch gekennzeichnet, daß die Kraftübertragungseinrichtung einen Antriebsmechanismus aufweist, der bei einer Schwenkbewegung der Klappe (108) aus der Schließstellung in die Gebrauchsstellung des Spiegels (109) die Beleuchtungseinrichtung (106) aus dem Blendenkörper (103) heraus in eine das Licht gegen das Gesicht der in den Spiegel blickenden Person richtende Lage und bei einer weitergehenden Schwenkbewegung der Klappe (108) wieder zurück in die Ausgangsstellung schwenkt.

6. Sonnenblende nach Anspruch 5, gekennzeichnet durch eine die Klappe (108) in der Gebrauchsstellung des Spiegels (109) kraftschlüssig haltende Rastvorrichtung.

7. Sonnenblende nach einem der Ansprüch 1 bis 6, dadurch gekennzeichnet, daß die Beleuchtungseinrichtung (6, 106) zwei vorzugsweise rechteckförmige Fenster (7) in Richtung der Klappachse (5; 105) im Abstand nebeneinander aufweist.

8. Sonnenblende nach einem der Ansprüche 1 bis 7, dadurch gekennzeichnet, daß der Blendenkörper (3; 103) mit einem Schalter (10) für die Beleuchtungseinrichtung (6; 106) versehen ist.

9. Sonnenblende nach Anspruch 8, dadurch gekennzeichnet, daß der Schalter (10) mittels der Klappe (8; 108) betätigbar ist und bei weggeschwenkter Klappe (8; 108) sich in seinem Einschaltzustand befindet.

10. Sonnenblende nach einem der Ansprüche 1 bis 9, dadurch gekennzeichnet, daß auf der in der Gebrauchsstellung der Frontscheibe des Fahrzeuges abgewandten Seite der Blendenkörper (3; 103) eine Tasche (12; 112) aufweist.

11. Sonnenblende nach Anspruch 10, dadurch gekennzeichnet, daß die Tasche (12; 112) mittels einer Folie gebildet ist, die längs ihrer beiden seitlichen Ränder sowie längs ihres unteren Randes mit dem Blendenkörper (3; 103) verbunden ist.

12. Sonnenblende nach einem der Ansprüche 1 bis 11, gekennzeichnet durch einen die Beleuchtungseinrichtung (106) in Abhängigkeit von der Umgebungshelligkeit aus- und einschaltenden Helligkeitssensor (114).

13. Sonnenblende nach Anspruch 12, dadurch gekennzeichnet, daß der Helligkeitssensor (114) in der über die der Gebrauchslage des Spiegels (109) hinausgehenden Schwenkstellung der Klappe (108) abgeschaltet ist.

14. Sonnenblende nach Anspruch 12 oder 13, dadurch gekennzeichnet, daß der Helligkeitssensor (114) in der Klappe (108), im Blendenkörper (103) im Gehäuse der Beleuchtungseinrichtung, oder im Lagerbock (101) der Sonnenblende angeordnet ist.

# Fig.1

# Fig.2

Fig.3

Fig.4